# EUROPEAN PATENT APPLICATION

(11) **EP 4 489 113 A1**
(43) Date of publication of application: **08.01.2025**
(21) Application number: 23763024.9
(22) Date of filing: 21.03.2023
(51) Int. Cl.: H01M 4/36

(54) **TERNARY POSITIVE ELECTRODE MATERIAL FOR LITHIUM-ION BATTERY AND PREPARATION METHOD THEREFOR**

(30) Priority: 02.03.2022 CN 202210199885
(71) Applicant: BASF Shanshan Battery Materials Co., Ltd., Changsha, Hunan 410205 (CN)
(72) Inventor: FENG, Xin, Changsha, Hunan 410205 (CN); ZHAO, Xuemin, Changsha, Hunan 410205 (CN); LUO, Gui, Changsha, Hunan 410205 (CN); HUANG, Min, Changsha, Hunan 410205 (CN); TANG, Bo, Changsha, Hunan 410205 (CN); LI, Yan, Changsha, Hunan 410205 (CN); TAN, Xinxin, Changsha, Hunan 410205 (CN); LI, Xu, Changsha, Hunan 410205 (CN)
(74) Representative: Petraz, Gilberto Luigi
(86) International application number: PCT/CN2023/082662
(87) International publication number: WO 2023/165626

(57) **Abstract**

The present disclosure relates to a ternary positive electrode material for lithium-ion batteries, having a coated type structure. The core of the coated type structure includes a lithium composite metal oxide, and the outer coating in a form of wrinkles. The wrinkled outer coating is coated on a surface of the lithium composite metal oxide, and mainly is a cobalt-containing lithium metal oxide. The positive electrode material is prepared by: mixing a lithium source and a ternary precursor material at a molar ratio, subjecting the resulting mixture to multi-stage high-temperature sintering in an oxygen atmosphere, and cooling the resulting sinter to room temperature; and mixing the resulting lithium composite metal oxide with a cobalt source, or with the cobalt source and an M-containing compound, and then sintering the resulting mixture in an oxygen atmosphere to obtain the ternary positive electrode material. The product according to the present disclosure can reduce a residual lithium compound on the surface of the high-nickel material, improve specific capacity and cycle life of the material, and decrease the directive current resistance (DCR) of the material.

## Description

### TECHNICAL FIELD

The present disclosure relates to a positive electrode material for lithium batteries and a preparation method thereof, in particular to a ternary positive electrode material for lithium batteries and a preparation method thereof.

### BACKGROUND

Rechargeable lithium-ion batteries have been widely used in electronic equipment, household appliances, and power tools in recent years due to advantages such as high energy density, high operating voltage, low self-discharge degree, long cycle life, and environmental friendliness. The great success of lithium-ion batteries in portable electronic products has also promoted the development and application of pure electric vehicles.

With the rapid development of electric vehicles and large-scale energy storage, the energy density and cycle life of rechargeable lithium-ion batteries are facing huge challenges at the present stage. High-nickel layered oxide positive electrode materials are considered as the most promising candidates due to their high energy density and relatively low manufacturing costs. However, as the nickel content increases, the high-nickel layered oxides will suffer from serious capacity fading problems during cycling. On the one hand, unstable lithium residues (Li₂CO₃ and LiOH) on the surface of the materials will cause capacity fading; on the other hand, due to the similar ionic radii of lithium ions and divalent nickel ions, a mixed arrangement of lithium and nickel will be formed, and thus the layered positive electrode materials will transform into a rock-salt phase as the cycling proceeds, which is manifested by a significant increase in the direct current resistance (DCR) of the materials, eventually resulting in severe capacity fading. This structural instability is also manifested by the fact that intergranular cracks will occur in the high-nickel layered positive electrode materials during cycling, and the electrolyte will corrode the layered materials along the cracks, thereby shortening the cycle life of the high-nickel layered materials.

At present, the most direct method in the industry is to make the high-nickel materials subject to a water-washing process, so as to achieve the purpose of reducing residual lithium compounds. However, the water-washing process will first increase the complexity of the production process and destroy the surface structure of the materials to a certain extent, resulting in the cycle life and the energy density of the materials failing to meet the application requirements. Another effective method to overcome the degradation of high-nickel positive electrode materials is to make the materials subject to surface coating, and the surface coating can protect the positive electrode materials from electrolyte erosion and is an intuitive and effective method. However, most inactive coating materials are only adhered to or attached to the positive electrode materials and are easily mechanically peeled off by external forces. Further, these inactive coating materials also reduce the proportion of the active materials in positive electrode materials, resulting in a further reduction in energy density. Therefore, there is a need to develop a high-nickel layered oxide positive electrode material with a surface coating, which is not only active, but also can reduce residual lithium on the surface, improve capacity and cycle characteristics, and mitigate the DCR growth of the material.

### SUMMARY

The technical problem to be solved by the present disclosure is to overcome the shortcomings and deficiencies mentioned in the above background and provide a ternary positive electrode material for lithium-ion batteries, which can significantly reduce residual lithium compounds on a surface of a high-nickel material, effectively improve specific capacity and cycle life of the material, and significantly reduce the DCR of the material. Further, in another aspect, the present disclosure also provides a method for preparing the ternary positive electrode material for lithium-ion batteries.

To solve the above technical problems, the technical solution according to the present disclosure involves a ternary positive electrode material for lithium-ion batteries. The ternary positive electrode material has a coated type structure. The coated type structure includes a core containing a lithium composite metal oxide. The lithium composite metal oxide includes nickel (Ni), cobalt (Co) and manganese (Mn). The coated type structure includes a wrinkled outer coating. The wrinkled outer coating is coated on a surface of the lithium composite metal oxide, and mainly includes a cobalt-containing lithium metal oxide.

In the ternary positive electrode material for lithium-ion batteries, preferably, the lithium composite metal oxide in the ternary positive electrode material is represented by LiₐNiₓCo_{y}Mn_{1-x-y}O₂, in which 1.0<a<1.15, 0.8≤x<1, 0<y≤0.2, and 0<1-x-y. Further, the outer coating in the ternary positive electrode material is the cobalt-containing lithium metal oxide. The outer coating includes two or more selected from the group consisting of Li, Co, O, and M. The outer coating can be represented by LiₘCoMₙO₂, where M is one or more selected from the group consisting of Zr, Si, La, Ba, Sr, Nb, Al, Mg, and Y, 0.5≤m<1, and 0≤n≤0.2. The ternary positive electrode material is represented by LiₐNiₓCo_{y}Mn_{1-x-y}O₂·LiₘCoMₙO₂, in which 1.0<a<1.15, 0.8≤x<1, 0<y≤0.2, 0<1-x-y, and M as a doping element is one or more selected from the group consisting of Zr, Si, La, Ba, Sr, Nb, Al, Mg, and Y Preferably, the content of Ni in the ternary positive electrode material is equal to or greater than 80mol% of the total content of all transition metals.

In the ternary positive electrode material for lithium-ion batteries, preferably, a particle size of the ternary positive electrode material is in a range from 1.0 µm to 10.0 µm, preferably from 1.0 µm to 5.0 µm. By optimizing the particle size, the capacity performance can be maximized.

In the ternary positive electrode material for lithium-ion batteries, preferably, a specific surface area of the ternary positive electrode material is in a range from 0.3 m²/g to 0.9 m²/g, preferably from 0.7 m²/g to 0.9 m²/g. The ternary positive electrode material after being wrinkling coated exhibits an increased specific surface area, and the overall performances can be improved by comprehensively regulating the particle size and the specific surface area.

In the ternary positive electrode material for lithium-ion batteries, preferably, the outer coating further includes M, and M as the dopping element is one or more selected from the group consisting of Co, Zr, Si, La, Ba, Sr, Nb, Al, Mg and Y

In the ternary positive electrode material for lithium-ion batteries, preferably, the outer coating has a coating thickness in a range from 0.1 µm to 0.6 µm, preferably from 0.1µm to 0.4 µm.

In the ternary positive electrode material for lithium-ion batteries, preferably, the cobalt-containing lithium metal oxide in the outer coating is obtained by reacting a cobalt source with a residual lithium compound (such as LiCO₃ and LiOH) on the surface of the lithium composite metal oxide. In this way, the purpose of reducing the residual lithium compounds on the surface of the material can be achieved. By regulating the cobalt content in the wrinkled coating, the residual lithium can be effectively reduced and an electrochemically active cobalt-containing lithium metal oxide can be formed. Furthermore, the electrochemically active wrinkled coating has a larger specific surface area as compared with an ordinary coating, thus can accelerate the conduction of lithium ions and electrons, thereby further improving the rate performance of the material and mitigating the DCR growth.

In the ternary positive electrode material for lithium-ion batteries, preferably, the outer coating has a cobalt content in a range from 6000 ppm to 32000 ppm, preferablyfrom 6000 ppm to 19000 ppm. When the cobalt source is added in excess, the excess cobalt source will be converted into inactive Co₃O₄ at a high temperature, and the inactive Co₃O₄ will in turn hinder the conduction of lithium ions and electrons, thereby reducing the overall performance of the material.

In the ternary positive electrode material for lithium-ion batteries, preferably, in an X-ray diffraction (XRD) pattern of the ternary positive electrode material, a ratio of I₍₀₀₃₎/I₍₁₀₄₎ is in a range from 1.5 to 3.0. The greater the ratio of I₍₀₀₃₎/I₍₁₀₄₎, the better the layered structure of the material and the better the electrochemical performance.

In the ternary positive electrode material for lithium-ion batteries, preferably, the ternary positive electrode material has a wrinkle degree X in a range from 0.1 to 0.8 under a scanning electron microscope, where X= h/t, h is a height of a single wrinkle morphology at a surface of a single ternary positive electrode material grain, 20nm≤h≤120nm, and t is a width of the single wrinkle morphology at the surface of the single ternary positive electrode material grain, 100nm≤t≤200nm. Since there will be N wrinkles at the surface of the ternary positive electrode material grain, X is within a certain range, generally preferably from 0.1 to 0.8.

As a general technical concept, the present disclosure also provides a method for preparing a ternary positive electrode material for lithium-ion batteries, including the following steps:
1) mixing a lithium source and a ternary precursor material (such as NiₓCo_{y}Mn_{1-x-y}OH) at a molar ratio in a range from 1:1 to 1.15:1 to obtain a mixture, subjecting the mixture to multi-stage high-temperature sintering (preferably two-stage) in an oxygen atmosphere after the mixing, and cooling the resulting sinter to room temperature to obtain a lithium composite metal oxide; and
2) mixing the lithium composite metal oxide obtained in step 1) with a cobalt source, or with the cobalt source and an M-containing compound, and then sintering the resulting mixture in an oxygen atmosphere to obtain the ternary positive electrode material;

wherein an addition amount of the cobalt source is in a range from 10,000 ppm to 50,000 ppm (relative to the lithium composite metal oxide prepared in step 1).

In the above preparation method, the cobalt source can be selected from cobalt hydroxide or cobalt oxyhydroxide, and an acidic cobalt source may destroy the surface structure of the high-nickel material, thereby causing the degradation of the electrochemical performances.

In the above preparation method, preferably, the high-temperature sintering in step 1) is a two-stage calcination, the first stage calcination is conducted at a temperature in a range from 400 °C to 600 °C for 2 hours (h) to 4 h, and the second stage calcination is conducted at a temperature in a range from 600 °C to 1000 °C for 8 h to 15 h.

In the above preparation method, preferably, the sintering in step 2) is conducted at a temperature of 600 °C to 900 °C, preferably 650°C to 850 °C, for 5 h to 12 h, preferably 6 h to 9 h.

By adjusting the sintering temperature and time, the coating effect can be optimized to achieve an optimal wrinkled coating morphology. Further, by adjusting the sintering temperature and time in step 2), the coating effect can be optimized to achieve the optimal wrinkled coating morphology. When the sintering temperature is too low or the time is too short, the cobalt source cannot react with the residual lithium compound on the surface of the material, and thus a uniform coating cannot be formed, and uneven dot-like coating will occur. When the sintering temperature is too high or the time is too long, the lithium metal compound in the molten state on the surface of the material tends to be smoothed at the high temperature, and thus an ideal wrinkled coating cannot be formed.

In the above preparation method, preferably, the lithium source is one or more selected from the group consisting of lithium hydroxide, lithium carbonate, lithium acetate, and lithium nitrate.

In the above preparation method, preferably, the M-containing compound is a compound including at least one selected from Zr, Si, La, Ba, Sr, Nb, Al, Mg, and Y

Based on the cobalt content in the outer coating, the addition amount of the cobalt source is in a range from 10,000 ppm to 30,000 ppm. Further, in step 2), the cobalt source has a median particle size D50 in a range from 0.8 µm to 4.0 µm, optionally from 1.0 µm to 2.0 µm. By adjusting the median particle size of the cobalt source, the wrinkled coating can be made more uniform, thereby obtaining a high-nickel positive electrode material with better electrochemical performances.

Compared with the prior art, in the present disclosure, a high-nickel (the nickel content is greater than or equal to 80 mol%) NCM positive electrode material can be formed by coating the lithium composite metal oxide with a wrinkled cobalt-coating. The wrinkle-like coating can effectively remove lithium residues (lithium hydroxide and lithium carbonate) on the surface of the high-nickel positive electrode material, and an electrochemically active cobalt-containing lithium metal oxide can be formed on the surface of the high-nickel positive electrode material. The wrinkled coating does not damage the surface structure of the high-nickel material, and can avoid direct contact between the high-nickel positive electrode material and the electrolyte, thereby increasing the surface structural stability and cycling performance of the material. In addition, the wrinkled coating is a stable interface/structure coating, and the special morphology of the wrinkled coating can in turn increase the specific surface area of the particle material and reduce residual lithium, thus improving the ionic and electronic conductivity of the material, thereby further improving the rate performance of the material and reducing DCR. Furthermore, the cobalt-containing lithium metal oxide in the wrinkled coating has certain electrochemical activity, further improving the capacity characteristics of the material.

### BRIEF DESCRIPTION OF THE DRAWINGS

In order to more clearly illustrate the embodiments of the present disclosure or the technical solutions in the prior art, the drawings used in the embodiments or in the prior art will be described briefly below. Apparently, the drawings described in the following are merely some embodiments of the present disclosure, and for those skilled in the art, other drawings can be obtained according to these drawings without any creative effort.
FIG. 1 is a scanning electron microscope image of a wrinkling coated high-nickel ternary positive electrode material prepared in Example 1 of the present disclosure.
FIG. 2 shows a particle size distribution diagram obtain from the scanning electron microscope image of Example 1 of the present disclosure according to a legend scale.
FIG. 3 shows a particle size distribution curve of the wrinkling coated high-nickel ternary positive electrode material prepared in Example 1 of the present disclosure.
FIG. 4 is shows energy dispersive spectroscopy (EDS) spectrum of the surface wrinkled coating of the high-nickel ternary positive electrode material prepared in Example 1 of the present disclosure.
FIG. 5 is an electron-probe micro-analysis (EMPA) image of the wrinkling coated high-nickel ternary positive electrode material prepared in Example 1 of the present disclosure.
FIG. 6 is a scanning electron microscope image of a cross section of a single particle of the wrinkling coated high-nickel ternary positive electrode material prepared in Example 1 of the present disclosure.
FIG. 7 is an XRD pattern of the wrinkling coated high-nickel ternary positive electrode material prepared in Example 1 of the present disclosure.
FIG. 8 is a scanning electron microscope image of an uncoated high-nickel ternary positive electrode material prepared in Comparative Example 1.
FIG. 9 is a scanning electron microscope image of a smooth-coated high-nickel ternary positive electrode material prepared in Comparative Example 2.
FIG. 10 is a scanning electron microscope image of a dot-like coated high-nickel ternary positive electrode material prepared in Comparative Example 3.
FIG. 11 is a scanning electron microscope image of a high-nickel ternary positive electrode material prepared in Comparative Example 4.

### DETAILED DESCRIPTION

In order to facilitate understanding of the present disclosure, the present disclosure will be described more comprehensively and in detail below in conjunction with the accompanying drawings and preferred embodiments. However, the protection scope of the present disclosure is not limited to the following specific embodiments.

Unless otherwise defined, all technical terms used below have the same meanings as commonly understood by those skilled in the art. The technical terms used herein are only for the purpose of describing specific embodiments and are not intended to limit the protection scope of the present disclosure.

Unless otherwise specified, various raw materials, reagents, instruments and equipment used in the present disclosure can be purchased in the market or prepared by existing methods.

### Example 1

A method for preparing a high-nickel ternary positive electrode material for lithium-ion batteries was as follows:

### (1) Preparation of lithium composite metal oxide Li_{1.05}Ni_{0.83}Co_{0.12}Mn_{0.05}O₂

Lithium hydroxide monohydrate and 100 g of Ni_{0.83}Co_{0.12}Mn_{0.05}(OH)₂ were mixed at a molar ratio of 1.05:1. In an oxygen atmosphere, the mixed raw materials were heated from room temperature to 500 °C at a heating rate of 3°C/min, and calcined at 500 °C for 3 h; after that, the calcined product was further heated to 850°C, calcined at 850°C for 12 h, and then naturally cooled to room temperature to obtain the lithium composite metal oxide Li_{1.05}Ni_{0.83}Co_{0.12}Mn_{0.05}O₂.

### (2) Preparation of wrinkling cobalt-coated high-nickel ternary positive electrode material Li_{1.05}Ni_{0.83}Co_{0.12}Mn_{0.05}O₂

12300 ppm of cobalt hydroxide was added into 100 g of the lithium composite metal oxide Li_{1.05}Ni_{0.83}Co_{0.12}Mn_{0.05}O₂ and uniformly mixed. In an oxygen atmosphere, the mixture was heated to 720 °C at a heating rate of 3 °C/min and calcined at 720 °C for 7 h. The resulting product was cooled to room temperature to obtain the high-nickel ternary positive electrode material Li_{1.05}Ni_{0.83}Co_{0.12}Mn_{0.05}O₂.

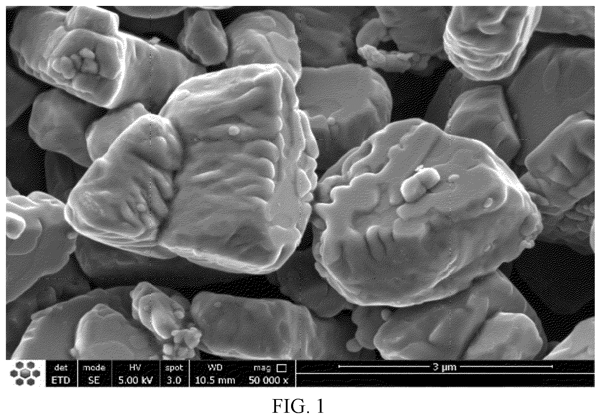

The high-nickel ternary positive electrode material prepared in this example was subjected to a field emission scanning electron microscopy (FE-SEM) test, and the result is shown in FIG. 1. As can been from FIG. 1, the high-nickel ternary positive electrode material prepared in this example has an obvious coated type structure. The coated type structure includes a core containing a lithium composite metal oxide (i.e., the core material prepared in step (1)), and the lithium composite metal oxide contains Li_{1.05}Ni_{0.83}Co_{0.12}Mn_{0.05}O₂. The outer coating of the coated type structure includes obvious wrinkles. The wrinkled outer coating is coated on the surface of the lithium composite metal oxide, and is mainly a cobalt-containing lithium metal oxide (i.e., the coating material prepared in step (2)).

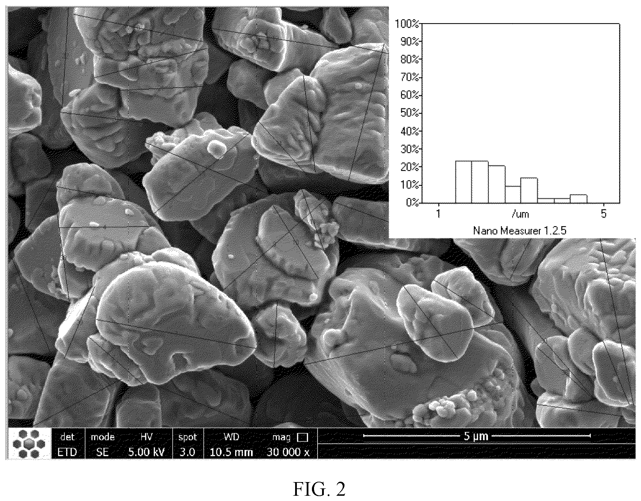

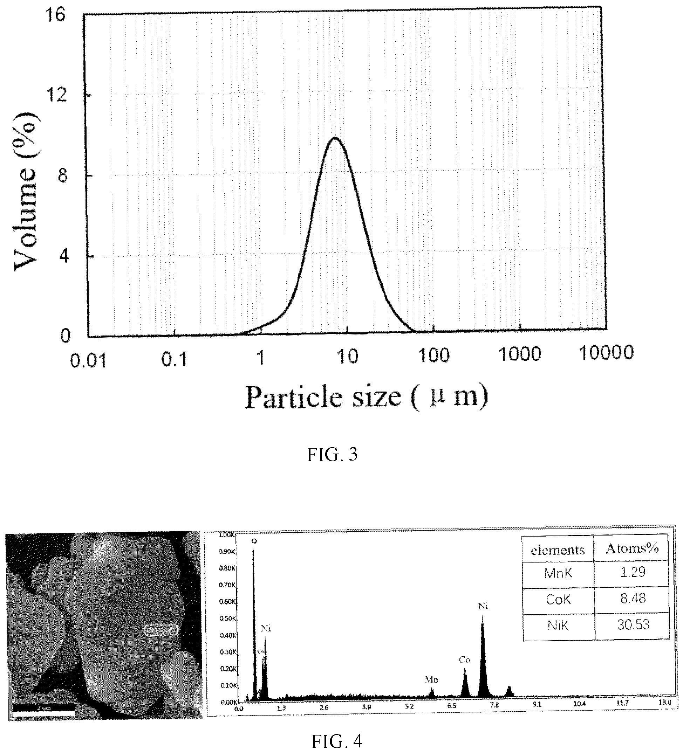

The wrinkling coated high-nickel ternary positive electrode material particles prepared in this example has a particle size in a range from 1.5 µm to 4.5 µm (see FIG. 2), a median particle size of 5.62 µm (see FIG. 3), a specific surface area of 0.74 m²/g, and pH of 11.71. The high-nickel ternary positive electrode material has a powder electrical conductivity of 0.023 S/cm at a specific gravity of 3.48 g/cc. The wrinkling cobalt-coated high-nickel ternary positive electrode material has a significantly reduced lithium residue on the surface compared with the lithium composite metal oxide material of step (1) (see Table 1 below). After wrinkling coating, lithium hydroxide and lithium carbonate contents on the surface of the sample has significantly reduced.

**Table 1: lithium residues on surfaces of samples before and after modification in Example 1**

| | LiOH (ppm) | Li₂CO₃(ppm) |
|---|---|---|
| lithium composite metal oxide prepared in step (1) of Example 1 | 995 | 1082 |
| high-nickel ternary positive electrode material prepared in step (2) of Example | 420 | 298 |

An EDS test was performed on the wrinkled coating of the high-nickel ternary positive electrode material prepared in this example, and the results are shown in FIG. 4. It can be seen from the EDS results that the wrinkled coating is a cobalt-containing lithium metal oxide, which is formed due to the reaction between the added cobalt source and the residual lithium compound on the surface of the lithium composite metal oxide. The cobalt content of the wrinkled coating is greater than that of the high-nickel ternary positive electrode material itself. This is due to the reaction between the added cobalt source and the residual lithium compound on the surface of the lithium composite metal oxide. The cobalt content in the wrinkled coating is 7500 ppm.

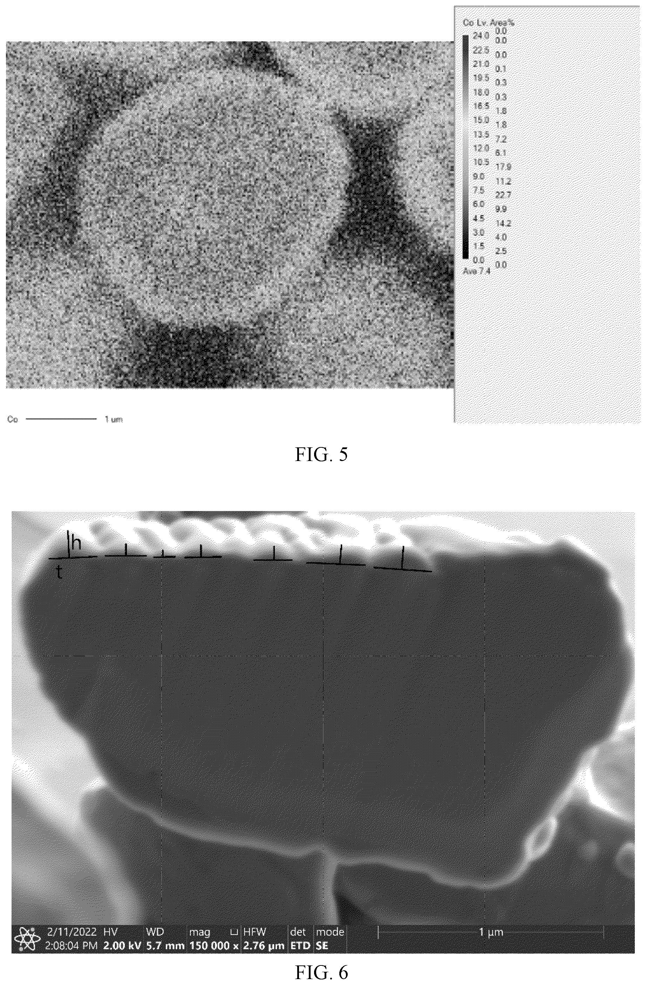

An electron-probe micro-analysis (EMPA) was further performed on the wrinkled coating of wrinkling coated high-nickel ternary positive electrode material prepared in this example, and the results are shown in FIG. 5. It can be seen from the EMPA test results that the wrinkled cobalt coating is evenly coated on the surface of the material, and has a coating thickness of approximately 0.3 µm.

A scanning electron microscope test was performed on a cross section of the wrinkling coated high-nickel ternary positive electrode material prepared in this example. The result is shown in FIG. 6. From the result, it can be seen that the wrinkle degree is in a range from 0.21 to 0.63. The term "wrinkle degree" in this example is a parameter defined by the inventors, which can be represented by X, and means a ratio of height h to width t of a single wrinkle morphology at a surface of a single ternary positive electrode material grain, as shown in the following formula: X=h/t. The value of X of the product generally varies in a wide range, due to the existence of various different wrinkles.

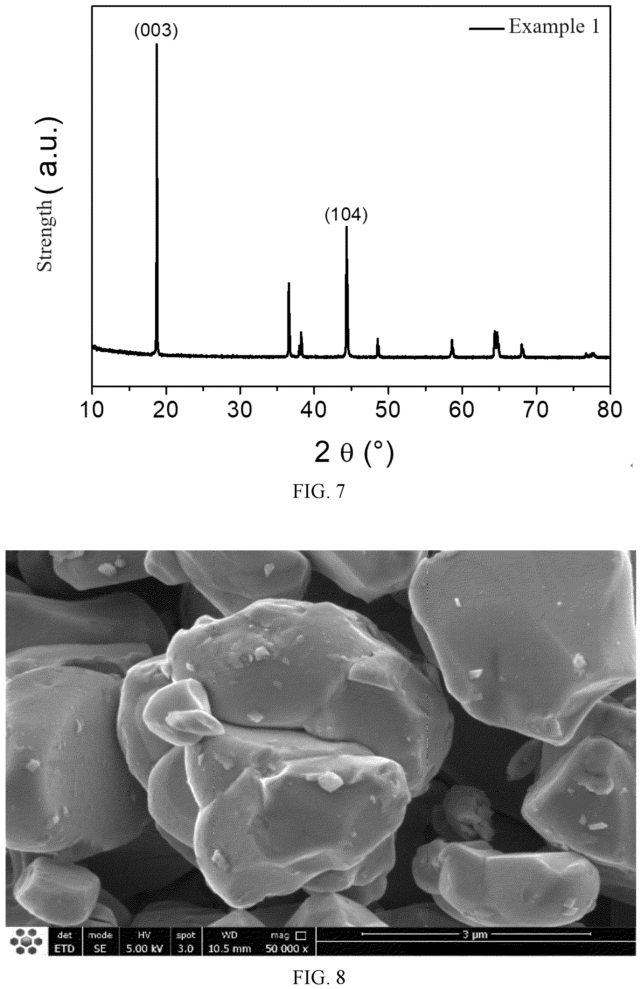

The wrinkling coated high-nickel ternary positive electrode material prepared in this example was subjected to an XRD test (see FIG. 7). The ratio of I₍₀₀₃₎/I₍₁₀₄₎ is 2.26. Generally speaking, the larger the ratio, the better the crystallinity of the material, and the more complete the coating structure.

The performance of the high-nickel ternary positive electrode material was evaluated and tested in a button-type battery, which was prepared by using the prepared wrinkling coated high-nickel ternary positive electrode material as the positive electrode and a lithium metal sheet as the negative electrode. The battery was charged and discharged at 25 °C with a voltage range of 3.0 V to 4.3 V and a current density of 0.1 C, achieving a specific discharge capacity of 207 mAh/g and a Coulombic efficiency of 87.8%. Then the battery was respectively discharged at 0.2 C/0.5 C/1.0 C/2.0 C rates, achieving a discharge retention rate of 90.3% at 2.0C/0.2C rates. The battery was then charged and discharged for 60 cycles at 1C, and the capacity retention rate is 95.1%. Further, a DCR test was conducted at 45 °C, with a voltage range of 3.0V to 4.3 V and a current density of 0.5 C, and the results showed that the DCR of the material at 10% state of charge (SOC) is 27.8 Ω, and the DCR increases to 25% after 50 cycles, indicating that the wrinkling coated high-nickel ternary positive electrode material can effectively improve the capacity, cycling performance and rate performance, and can reduce the DCR value.

### Example 2

A method for preparing a high-nickel ternary positive electrode material for lithium-ion batteries was as follows:

### (1) Preparation of lithium composite metal oxide Li_{1.05}Ni_{0.83}Co_{0.12}Mn_{0.05}O₂

Lithium hydroxide monohydrate and 100 g of Ni_{0.83}Co_{0.12}Mn_{0.05}(OH)₂ were mixed at a molar ratio of 1.05:1. In an oxygen atmosphere, the mixed raw materials were heated from room temperature to 500 °C at a heating rate of 3 °C/min, and calcined at 500 °C for 3 h; after that, the calcined product was further heated to 850 °C, calcined at 850 °C for 12 h, and then naturally cooled to room temperature to obtain the lithium composite metal oxide Li_{1.05}Ni_{0.83}Co_{0.12}Mn_{0.05}O₂.

### (2) Preparation of wrinkling cobalt-coated high-nickel ternary positive electrode material Li_{1.05}Ni_{0.83}Co_{0.12}Mn_{0.05}O₂·Li_{0.83}CoAl_{0.2}O₂.

12300 ppm of cobalt hydroxide and 1500 ppm of aluminum hydroxide were added into 100 g of the lithium composite metal oxide Li_{1.05}Ni_{0.83}Co_{0.12}Mn_{0.05}O₂ and uniformly mixed. In an oxygen atmosphere, the mixture was heated to 710 °C at a heating rate of 3 °C/min and calcined at 710 °C for 7 h. The resulting product was cooled to room temperature to obtain the high-nickel ternary positive electrode material Li_{1.05}Ni_{0.83}Co_{0.12}Mn_{0.05}O₂·Li_{0.83}CoAl_{0.2}O₂.

The high-nickel ternary positive electrode material prepared in this example was subjected to a FE-SEM test, and the result showed that the high-nickel ternary positive electrode material prepared in this example has an obvious coated type structure. The coated type structure includes a core containing a lithium composite metal oxide (i.e., the core material prepared in step (1)), and the lithium composite metal oxide contains Li_{1.05}Ni_{0.83}Co_{0.12}Mn_{0.05}O₂. The outer coating of the coated type structure includes obvious wrinkles. The wrinkled outer coating is coated on the surface of the lithium composite metal oxide, and is mainly a cobalt-containing lithium metal oxide (i.e., the coating material prepared in step (2)).

The wrinkling coated high-nickel ternary positive electrode material particles prepared in this example has a particle size in a range from 1.3 µm to 4.5 µm, a median particle size of 5.48 µm, a specific surface area of 0.78 m²/g, and pH of 11.68. The high-nickel ternary positive electrode material has a powder electrical conductivity of 0.022 S/cm at a specific gravity of 3.50 g/cc. The wrinkling cobalt-coated high-nickel ternary positive electrode material has a significantly reduced lithium residue on the surface compared with the lithium composite metal oxide material of step (1).

An EDS test was performed on the wrinkled coating of the high-nickel ternary positive electrode material prepared in this example. The EDS results showed that the wrinkled coating is a cobalt and aluminum-containing lithium metal oxide. The cobalt content of the wrinkled coating is greater than that of the high-nickel ternary positive electrode material itself. This is due to the reaction between the added cobalt source and the residual lithium compound on the surface of the lithium composite metal oxide. In the wrinkled coating, the cobalt content is 7480 ppm and the aluminum content is 1350 ppm.

An electron-probe micro-analysis (EMPA) was further performed on the wrinkled coating of wrinkling coated high-nickel ternary positive electrode material prepared in this example. The EMPA test results showed that the wrinkled cobalt-coating is evenly coated on the surface of the material, and has a coating thickness of approximately 0.32 µm.

A scanning electron microscope test was performed on a cross section of the wrinkling coated high-nickel ternary positive electrode material prepared in this example, and the test method was performed as described above. The results showed that the wrinkle degree is in a range from 0.25 to 0.68.

The wrinkling coated high-nickel ternary positive electrode material prepared in this example was subjected to an XRD test. The ratio of I₍₀₀₃₎/I₍₁₀₄₎ is 2.42. Generally speaking, the larger the ratio, the better the crystallinity of the material, and the more complete the coating structure.

The performance of the high-nickel ternary positive electrode material was evaluated and tested in a button-type battery, which was prepared by using the prepared wrinkling coated high-nickel ternary positive electrode material as the positive electrode and a lithium metal sheet as the negative electrode. The battery was charged and discharged at 25 °C with a voltage range of 3.0V to 4.3 V and a current density of 0.1 C, achieving a specific discharge capacity of 207 mAh/g and a Coulombic efficiency of 88.2%. Then the battery was respectively discharged at 0.2 C/0.5 C/1.0 C/2.0 C rates, achieving a discharge retention rate of 91.1% at 2.0 C/0.2 C rates. The battery was then charged and discharged for 60 cycles at 1 C, and the capacity retention rate is 96.1%. Further, a DCR test was conducted at 45 °C, with a voltage range of 3.0V to 4.3 V and a current density of 0.5C, and the results showed that the DCR of the material under 10% SOC is 29.4 Ω, and the DCR increases to 26% after 50 cycles, indicating that the wrinkling coated high-nickel ternary positive electrode material can effectively improve the capacity, cycling performance and rate performance, and can reduce the DCR value. By further co-coating with aluminum, the cycling performance of the material is further improved.

### Example 3

A method for preparing a high-nickel ternary positive electrode material for lithium-ion batteries was as follows:

### (1) Preparation of lithium composite metal oxide Li_{1.05}Ni_{0.90}Co_{0.05}Mn_{0.05}O₂

Lithium hydroxide monohydrate and 100 g of Ni_{0.90}Co_{0.05}Mn_{0.05}(OH)₂ were mixed at a molar ratio of 1.05:1. In an oxygen atmosphere, the mixed raw materials were heated from room temperature to 500 °C at a heating rate of 3 °C/min, and calcined at 500 °C for 3 h; after that, the calcined product was further heated to 850 °C and calcined at 850 °C for 12 h, and then naturally cooled to room temperature to obtain the lithium composite metal oxide Li_{1.05}Ni_{0.90}Co_{0.05}Mn_{0.05}O₂.

### (2) Preparation of wrinkling cobalt-coated high-nickel ternary positive electrode material Li_{1.05}Ni_{0.90}Co_{0.05}Mn_{0.05}O₂·Li_{0.61}CoAl_{0.2}O₂.

18500 ppm of cobalt oxyhydroxide and 1500 ppm of aluminum hydroxide were added into 100 g of the lithium composite metal oxide Li_{1.05}Ni_{0.90}Co_{0.05}Mn_{0.05}O₂ and uniformly mixed. In an oxygen atmosphere, the mixture was heated to 715 °C at a heating rate of 3 °C/min and calcined at 715 °C for 7 h. The resulting product was cooled to room temperature to obtain the high-nickel ternary positive electrode material Li_{1.05}Ni_{0.90}Co_{0.05}Mn_{0.05}O₂·Li_{0.61}CoAl_{0.2}O₂.

The high-nickel ternary positive electrode material prepared in this example was subjected to a FE-SEM test, and the results showed that the high-nickel ternary positive electrode material prepared in this example has an obvious coated type structure. The coated type structure has a core containing a lithium composite metal oxide (i.e., the core material prepared in step (1)), and the lithium composite metal oxide contains Li_{1.05}Ni_{0.90}Co_{0.05}Mn_{0.05}O₂. The outer coating of the coated type structure includes obvious wrinkles. The wrinkled outer coating is coated on the surface of the lithium composite metal oxide, and is mainly a cobalt-containing lithium metal oxide (i.e., the coating material prepared in step (2)).

The wrinkling coated high-nickel ternary positive electrode material particles prepared in this example has a particle size in a range from 1.2 µm to 4.6 µm, a median particle size of 5.21 µm, a specific surface area of 0.82 m²/g, and pH of 11.73. The high-nickel ternary positive electrode material has a powder electrical conductivity of 0.023 S/cm at a specific gravity of 3.48 g/cc. The wrinkling cobalt-coated high-nickel ternary positive electrode material has a significantly reduced lithium residue on the surface compared with the lithium composite metal oxide material of step (1).

An EDS test was performed on the wrinkled coating of the high-nickel ternary positive electrode material prepared in this example. The EDS results showed that the wrinkled coating is a cobalt and aluminum-containing lithium metal oxide. The cobalt content of the wrinkled coating is greater than that of the high-nickel ternary positive electrode material itself. This is due to the reaction between the added cobalt source and the residual lithium compound on the surface of the lithium composite metal oxide. In the wrinkled coating, the cobalt content is 16700 ppm and the aluminum content is 1380 ppm.

An electron-probe micro-analysis (EMPA) was further performed on the wrinkled coating of wrinkling coated high-nickel ternary positive electrode material prepared in this example. The EMPA test results showed that the wrinkled cobalt-coating is evenly coated on the surface of the material, and has a coating thickness of approximately 0.39 µm.

A scanning electron microscope test was performed on a cross section of the wrinkling coated high-nickel ternary positive electrode material prepared in this example. The results showed that the wrinkle degree is in a range from 0.19 to 0.71.

The wrinkling coated high-nickel ternary positive electrode material prepared in this example was subjected to an XRD test. The ratio of I₍₀₀₃₎/I₍₁₀₄₎ is 2.35. Generally speaking, the larger the ratio, the better the crystallinity of the material, and the more complete the coating structure.

The performance of the high-nickel ternary positive electrode material was evaluated and tested in a button-type battery, which was prepared by using the prepared wrinkling coated high-nickel ternary positive electrode material as the positive electrode and a lithium metal sheet as the negative electrode. The battery was charged and discharged at 25 °C, with a voltage range of 3.0V to 4.3 V and a current density of 0.1 C, achieving a specific discharge capacity of 206 mAh/g and a Coulombic efficiency of 89.1%. Then the battery was respectively discharged at 0.2 C/0.5 C/1.0 C/2.0 C rates, achieving a discharge retention rate of 90.6% at 2.0 C/0.2 C rates. The battery was then charged and discharged for 60 cycles at 1 C, and the capacity retention rate is 95.9%. Further, a DCR test was conducted at 45 °C, with a voltage range of 3.0 V to 4.3 V and a current density of 0.5 C, and the results showed that the DCR of the material under 10% SOC is 28.2 Ω, and the DCR increases to 25% after 50 cycles, indicating that the wrinkling coated high-nickel ternary positive electrode material can effectively improve the capacity, cycling performance and rate performance, and can reduce the DCR value. By further co-coating with aluminum, the cycling performance of the material is further improved.

### Comparative Example 1

In this comparative example, an uncoated high-nickel ternary positive electrode material Li_{1.05}Ni_{0.83}Co_{0.12}Mn_{0.05}O₂ was prepared, and the method was as follows:

Lithium hydroxide monohydrate and 100 g of Ni_{0.83}Co_{0.12}Mn_{0.05}(OH)₂ were mixed at a molar ratio of 1.05:1. In an oxygen atmosphere, the mixed raw materials were heated from room temperature to 500 °C at a heating rate of 3°C/min, and calcined at 500 °C for 3 h; after that, the calcined product was further heated to 850°C and calcined at 850 °C for 12 h, and then naturally cooled to room temperature to obtain the uncoated high-nickel ternary positive electrode material Li_{1.05}Ni_{0.83}Co_{0.12}Mn_{0.05}O₂.

The material prepared in Comparative Example 1 has the same Ni, Co and Mn components as that prepared in Example 1, but was not coated. The material prepared in Comparative Example 1 was subjected to a FE-SEM test, and the result is shown in FIG. 8. The high-nickel ternary positive electrode material prepared in Comparative Example 1 does not include an obvious coating, and the surface of the material is relatively smooth. The high-nickel ternary positive electrode material particles prepared in Comparative Example 1 have a particle size in a range from 1.0 µm to 4.8 µm, a median particle size of 5.46 µm, a specific surface area of 0.73 m²/g, and pH of 11.74. The material has a powder electrical conductivity of 0.017 S/cm at a specific gravity of 3.40 g/cc. The high-nickel ternary positive electrode material prepared in Comparative Example 1 was subjected to an XRD test. The ratio of I₍₀₀₃₎/I₍₁₀₄₎ is 1.84. The material prepared in Comparative Example 1 has poorer crystallinity and less completeness compared with the material prepared in Example 1.

The performance of the material was evaluated and tested in a button-type battery, which was prepared by using the uncoated high-nickel ternary positive electrode material prepared in Comparative Example 1 as the positive electrode and a lithium metal sheet as the negative electrode. The battery was charged and discharged at 25 °C with a voltage range of 3.0 V to 4.3 V and a current density of 0.1 C, achieving a specific discharge capacity of 201 mAh/g and a Coulombic efficiency of 87.2%. Then the battery was respectively discharged at 0.2 C/0.5 C/1.0 C/2.0 C rates, achieving a discharge retention rate of 86.7% at 2.0 C/0.2 C. The battery was then charged and discharged for 60 cycles at 1C, and the capacity retention rate is 90.3%. Further, a DCR test was conducted at 45 °C, with a voltage range of 3.0 V to 4.3 V and a current density of 0.5 C, and the results showed that the DCR of the material at 10% SOC is 55.6 Ω, and the DCR increases to 87.7% after 50 cycles, indicating that the uncoated high-nickel ternary positive electrode material is significantly inferior to the product prepared in examples of the present disclosure in terms of the capacity, cycling performance, rate performance, and growth of DCR.

### Comparative Example 2

In this comparative example, a smooth cobalt-coated high-nickel ternary positive electrode material was prepared, and the method was as follows:

### (1) Preparation of lithium-containing metal oxide Li_{1.05}Ni_{0.83}Co_{0.12}Mn_{0.05}O₂

Lithium hydroxide monohydrate and 100 g of Ni_{0.83}Co_{0.12}Mn_{0.05}(OH)₂ were mixed at a molar ratio of 1.05:1. In an oxygen atmosphere, the mixed raw materials were heated from room temperature to 500 °C at a heating rate of 3°C/min, and calcined at 500 °C for 3 h; after that, the calcined product was further heated to 850 °C and calcined at 850 °C for 12 h, and then naturally cooled to room temperature to obtain the lithium-containing metal oxide Li_{1.05}Ni_{0.83}Co_{0.12}Mn_{0.05}O₂.

### (2) Preparation of smooth cobalt-coated high-nickel ternary positive electrode material Li_{1.05}Ni_{0.83}Co_{0.12}Mn_{0.05}O₂

12355 ppm of cobalt hydroxide was added into 100 g of the lithium-containing metal oxide Li_{1.05}Ni_{0.83}Co_{0.12}Mn_{0.05}O₂ and uniformly mixed. In an oxygen atmosphere, the mixture was heated to 950 °C at a heating rate of 3 °C/min and calcined at 950 °C for 7 h. The resulting product was cooled to room temperature to obtain the smooth cobalt-coated high-nickel ternary positive electrode material Li_{1.05}Ni_{0.83}Co_{0.12}Mn_{0.05}O₂.

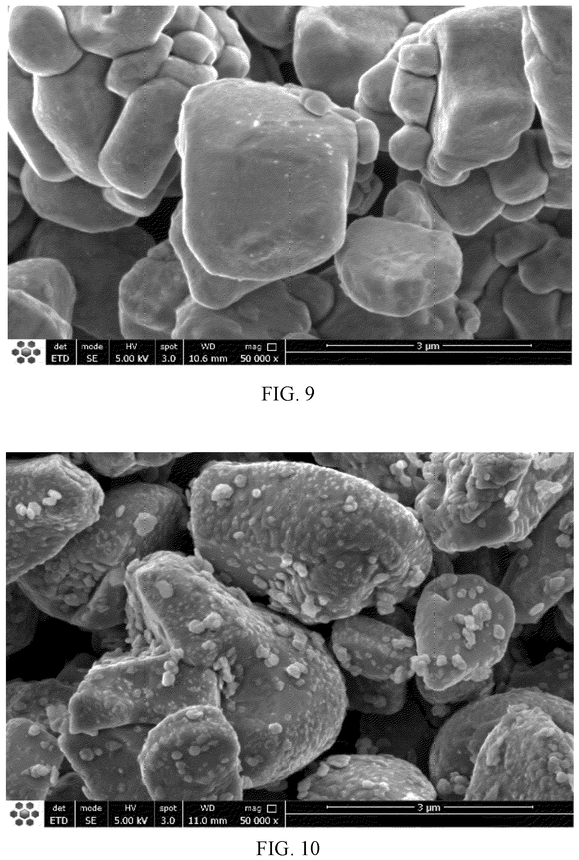

The material prepared in Comparative Example 2 has the same Ni, Co and Mn components as that prepared in Example 1, and was coated with cobalt. However, the coating prepared in this comparative example is smooth. The material prepared in Comparative Example 2 was subjected to a FE-SEM test, and the result is shown in FIG. 9. The high-nickel ternary positive electrode material prepared in Comparative Example 2 includes an obvious coating which however does not have a special morphology, and is coated on the surface of the lithium-containing metal oxide smoothly. The smooth coated high-nickel ternary positive electrode material particles prepared in Comparative Example 2 have a particle size in a range from 1.0 µm to 4.6 µm, a median particle size of 5.16 µm, a specific surface area of 0.71 m²/g, and pH of 11.45. The material has a powder electrical conductivity of 0.018 S/cm at a specific gravity of 3.43g/cc. The coating of high-nickel ternary positive electrode material prepared in Comparative Example 2 was subjected to an EDS test. The EDS results showed that the coating is a cobalt-containing lithium metal oxide. In the coating, the cobalt content is 7600 ppm. The high-nickel ternary positive electrode material prepared in Comparative Example 2 was subjected to an XRD test, and the ratio of I₍₀₀₃₎/I₍₁₀₄₎ is 2.17.

The performance of the material was evaluated and tested in a button-type battery, which was prepared by using the smooth cobalt-coated high-nickel ternary positive electrode material as the positive electrode and a lithium metal sheet as the negative electrode. The battery was charged and discharged at 25 °C, with a voltage range of 3.0V to 4.3 V and a current density of 0.1 C, achieving a specific discharge capacity of 206 mAh/g and a Coulombic efficiency of 87.8%. The battery was respectively discharged at 0.2 C/0.5 C/1.0 C/2.0 C rates, achieving a discharge retention rate of 87.2% at 2.0C/0.2C. The battery was then charged and discharged for 60 cycles at 1C, and the capacity retention rate is 91.4%. Further, a DCR test was conducted at 45 °C, with a voltage range of 3.0 V to 4.3 V and a current density of 0.5 C, and the results showed that the DCR of the material at 10% SOC is 43.1 Ω, and the DCR increases to 43% after 50 cycles, indicating that the smooth cobalt-coated high-nickel ternary positive electrode material is inferior to the wrinkling coated high-nickel ternary positive electrode material according to the present disclosure in terms of cycling performance, rate performance, and growth of DCR, although both have similar initial capacity.

### Comparative Example 3

A method for preparing a cobalt-aluminum co-coated high-nickel positive electrode material Li_{1.05}Ni_{0.83}Co_{0.12}Mn_{0.05}O₂·Li_{1.1}CoAl_{0.4}O₂ was as follows:

### (1) Preparation of lithium-containing metal oxide Li_{1.05}Ni_{0.83}Co_{0.12}Mn_{0.05}O₂

Lithium hydroxide monohydrate and 100 g of Ni_{0.83}Co_{0.12}Mn_{0.05}(OH)₂ were mixed at a molar ratio of 1.05:1. In an oxygen atmosphere, the mixed raw materials were heated from room temperature to 500 °C at a heating rate of 3°C/min, and calcined at 500 °C for 3 h; after that, the calcined product was further heated to 850 °C and calcined at 850 °C for 12 h, and then naturally cooled to room temperature to obtain the lithium-containing metal oxide Li_{1.05}Ni_{0.83}Co_{0.12}Mn_{0.05}O₂.

### (2) Preparation of cobalt-aluminum co-coated high-nickel ternary positive electrode material Li_{1.05}Ni_{0.83}Co_{0.12}Mn_{0.05}O₂·Li_{1.1}CoAl_{0.4}O₂

5000 ppm of cobalt hydroxide and 1500 ppm of aluminum hydroxide were added into 100 g of the lithium-containing metal oxide Li_{1.05}Ni_{0.83}Co_{0.12}Mn_{0.05}O₂ and uniformly mixed. In an oxygen atmosphere, the mixture was heated to 710 °C at a heating rate of 3 °C/min and calcined at 710 °C for 7 h. The resulting product was cooled to room temperature to obtain the cobalt-coated high-nickel positive electrode material Li_{1.05}Ni_{0.83}Co_{0.12}Mn_{0.05}O₂·Li_{1.1}CoAl_{0.4}O₂.

The material prepared in Comparative Example 3 has the same Ni, Co and Mn components as that prepared in Example 2, and was also coated with cobalt and aluminum as that in Example 2. The difference was in that the cobalt hydroxide was added at a less amount in Comparative Example 3, which was 5000 ppm. The cobalt-aluminum co-coated high-nickel positive electrode material prepared in Comparative Example 3 has a particle coating morphology. The material prepared in Comparative Example 3 was subjected to a FE-SEM test, and the result is shown in FIG. 10. The high-nickel ternary positive electrode material prepared in Comparative Example 3 includes an obvious coating, the morphology of which however is a large amount of particles and is significantly distinct from the morphology of the wrinkling coating. This reveals that reducing the amount of cobalt source will affect the formation of wrinkle morphology, and an insufficient amount of cobalt source will not result in a uniform wrinkling coating but a particle coating. The high-nickel ternary positive electrode material particles prepared in Comparative Example 3 have a particle size in a range from 1.4 µm to 4.2 µm, a median particle size of 5.21 µm, a specific surface area of 0.84 m²/g, and pH of 11.56. The material has a powder electrical conductivity of 0.020 S/cm at a specific gravity of 3.46 g/cc. The particle cobalt-aluminum co-coated high-nickel ternary positive electrode material prepared in Comparative Example 3 was subjected to an XRD test, and the ratio of I₍₀₀₃₎/I₍₁₀₄₎ is 2.24.

The performance of the material was evaluated and tested in a button-type battery, which was prepared by using the particle cobalt-aluminum co-coated high-nickel ternary positive electrode material as the positive electrode and a lithium metal sheet as the negative electrode. The battery was charged and discharged at 25 °C, with a voltage range of 3.0 V to 4.3 V and a current density of 0.1 C, achieving a specific discharge capacity of 203 mAh/g and a Coulombic efficiency of 88.2%. The battery was respectively discharged at 0.2 C/0.5 C/1.0 C/2.0 C rates, achieving a discharge retention rate of 88.5% at 2.0 C/0.2 C. The battery was then charged and discharged for 60 cycles at 1C, and the capacity retention rate is 92.5%. Further, a DCR test was conducted at 45°C, with a voltage range of 3.0V to 4.3V and a current density of 0.5C, and the results showed that the DCR of the material at 10% SOC is 42.8 Ω, and the DCR increases to 41% after 50 cycles. These results show that the amount of cobalt source adopted in the coating will affect the coating effect, and the electrochemical performances of the particle coated high-nickel positive electrode material is inferior to that of the wrinkling coated high-nickel ternary positive electrode material prepared in Example 2.

### Comparative Example 4

A method for preparing a cobalt-aluminum co-coated high-nickel positive electrode material Li_{1.05}Ni_{0.90}Co_{0.05}Mn_{0.05}O₂·Li_{0.62}CoAl_{0.2}O₂ was as follows:

### (1) Preparation of lithium-containing metal oxide Li_{1.05}Ni_{0.90}Co_{0.05}Mn_{0.05}O₂

Lithium hydroxide monohydrate and 100 g of Ni_{0.90}Co_{0.05}Mn_{0.05}(OH)₂ were mixed at a molar ratio of 1.05:1. In an oxygen atmosphere, the mixed raw materials were heated from room temperature to 500 °C at a heating rate of 3°C/min, and calcined at 500 °C for 3 h; after that, the calcined product was further heated to 850°C and calcined at 850 °C for 12 h, and then naturally cooled to room temperature to obtain the lithium-containing metal oxide Li_{1.05}Ni_{0.90}Co_{0.05}Mn_{0.05}O₂.

### (2) Preparation of cobalt-aluminum co-coated high-nickel positive electrode material Li_{1.05}Ni_{0.90}Co_{0.05}Mn_{0.05}O₂·Li_{0.62}CoAl_{0.2}O₂

18500 ppm of cobalt acetate and 1500 ppm of aluminum hydroxide were added into 100 g of the lithium-containing metal oxide Li_{1.05}Ni_{0.83}Co_{0.12}Mn_{0.05}O₂ and uniformly mixed. In an oxygen atmosphere, the mixture was heated to 715 °C at a heating rate of 3 °C/min and calcined at 715 °C for 7 h. The resulting product was cooled to room temperature to obtain the cobalt-aluminum co-coated high-nickel positive electrode material Li_{1.05}Ni_{0.90}Co_{0.05}Mn_{0.05}Al_{0.05}O₂.

The material prepared in Comparative Example 4 has the same Ni, Co and Mn components as that prepared in Example 3, and was also coated with cobalt and aluminum as that in Example 3. The difference was in that the cobalt source used was cobalt acetate instead of cobalt hydroxide or oxyhydroxide having a smaller particle size.

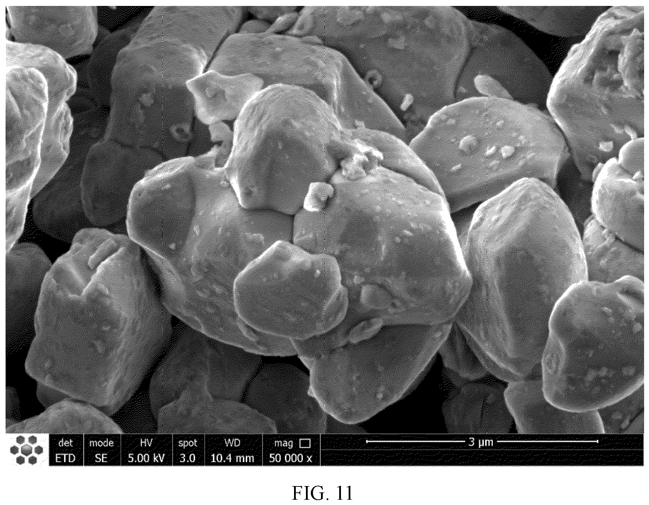

The material prepared in Comparative Example 4 was subjected to a FE-SEM test, and the result is shown in FIG. 11. The high-nickel positive electrode material prepared in Comparative Example 4 although can form a thin coating on the surface, but cannot form a wrinkle morphology. There are a large number of aggregated particles on the surface of the material. The high-nickel positive electrode material particles prepared in Comparative Example 4 have a particle size in a range from 1.1 µm to 4.7 µm, a median particle size of 5.53 µm, a specific surface area of 0.76 m²/g, and pH of 11.48. The material has a powder electrical conductivity of 0.020 S/cm at a specific gravity of 3.47 g/cc. The cobalt-aluminum coated high-nickel ternary positive electrode material prepared in Comparative Example 4 was subjected to an XRD test, and the ratio of I₍₀₀₃₎/I₍₁₀₄₎ is 2.19.

The performance of the material was evaluated and tested in a button-type battery, which was prepared by using the prepared high-nickel ternary positive electrode material prepared in Comparative Example 4 as the positive electrode and a lithium metal sheet as the negative electrode. The battery was charged and discharged at 25 °C, with a voltage range of 3.0 V to 4.3 V and a current density of 0.1 C, achieving a specific discharge capacity of 203 mAh/g and a Coulombic efficiency of 88.4%. The battery was respectively discharged at 0.2 C/0.5 C/1.0 C/2.0 C rates, achieving a discharge retention rate of 88.7% at 2.0C/0.2C. The battery was then charged and discharged for 60 cycles at 1C, and the capacity retention rate is 92.6%. Further, a DCR test was conducted at 45°C, with a voltage range of 3.0V to 4.3 V and a current density of 0.5 C, and the results showed that the DCR of the material at 10% SOC is 36.7 Ω, and the DCR increases to 49% after 50 cycles. These results show that the selection of the type of cobalt source in the coating will affect the coating effect; different coating morphologies of the high-nickel positive electrode materials will result in different electrical performances; and the wrinkling coated high-nickel positive electrode materials have the best performance in terms of capacity, cycling performance, rate performance and DCR performance.

## Claims

1. A ternary positive electrode material for lithium-ion batteries, the ternary positive electrode material having a coated type structure, the coated type structure comprising:
a core comprising a lithium composite metal oxide, the lithium composite metal oxide comprising nickel, cobalt and manganese; and
a wrinkled outer coating coated on a surface of the lithium composite metal oxide, the wrinkled outer coating mainly comprising a cobalt-containing lithium metal oxide.

2. The ternary positive electrode material for lithium-ion batteries according to claim 1, wherein the ternary positive electrode material is represented by LiₐNiₓCo_{y}Mn_{1-x-y}O₂·LiₘCoMₙO₂, where 1.0≤a≤1.15, 0.8≤x<1, 0<y≤0.2, 0<1-x-y, 0.5≤m<1, 0≤n≤0.2, and M is selected from the group consisting of Zr, Si, La, Ba, Sr, Nb, Al, Mg, Y, and combinations thereof.

3. The ternary positive electrode material for lithium-ion batteries according to claim 1, wherein a particle size of the ternary positive electrode material is in a range from 1.0 µm to 10.0 µm, preferably from 1.0 µm to 5.0 µm.

4. The ternary positive electrode material for lithium-ion batteries according to claim 1, wherein a specific surface area of the ternary positive electrode material is in a range from 0.3 m²/g to 0.9 m²/g, preferably from 0.7 m²/g to 0.9 m²/g.

5. The ternary positive electrode material for lithium-ion batteries according to claim 1, wherein the outer coating further comprises an element M, and M is selected from the group consisting of Zr, Si, La, Ba, Sr, Nb, Al, Mg, Y, and combinations thereof.

6. The ternary positive electrode material for lithium-ion batteries according to any one of claims 1 to 5, wherein the outer coating has a cobalt content in a range from 6000 ppm to 32000 ppm and a coating thickness in a range from 0.1 µm to 0.6 µm.

7. The ternary positive electrode material for lithium-ion batteries according to claim 6, wherein the cobalt content of the outer coating is a range from 6000 ppm to 19000 ppm, and the coating thickness of the outer coating is a range from 0.1 µm to 0.4 µm.

8. The ternary positive electrode material for lithium-ion batteries according to any one of claims 1 to 5, wherein the cobalt-containing lithium metal oxide in the outer coating is obtained by reacting a cobalt source with a residual lithium compound on the surface of the lithium composite metal oxide.

9. The ternary positive electrode material for lithium-ion batteries according to any one of claims 1 to 5, wherein in an XRD pattern of the ternary positive electrode material, and a ratio of I₍₀₀₃₎/I₍₁₀₄₎ is in a range from 1.5 to 3.0.

10. The ternary positive electrode material for lithium-ion batteries according to any one of claims 1 to 5, wherein the ternary positive electrode material has a wrinkle degree X in a range from 0.1 to 0.8 under a scanning electron microscope, where X= h/t, h is a height of a single wrinkle morphology at a surface of a single ternary positive electrode material grain, 20nm≤h≤120nm, t is a width of the single wrinkle morphology at the surface of the single ternary positive electrode material grain, and 100nm≤t≤200nm.

11. A method for preparing a ternary positive electrode material for lithium-ion batteries, comprising following steps:
1) mixing a lithium source and a ternary precursor material at a molar ratio in a range from 1:1 to 1.15:1 to obtain a mixture, subjecting the mixture to multi-stage high-temperature sintering in an oxygen atmosphere after the mixing, and cooling the resulting sinter to room temperature to obtain a lithium composite metal oxide; and
2) mixing the lithium composite metal oxide obtained in step 1) with a cobalt source, or with the cobalt source and an M-containing compound, and then sintering the resulting mixture in an oxygen atmosphere to obtain the ternary positive electrode material;
wherein the cobalt source is selected from cobalt hydroxide or cobalt oxyhydroxide, and an addition amount of the cobalt source is in a range from 10,000 ppm to 50,000 ppm.

12. The method according to claim 11, wherein the lithium source is selected from the group consisting of lithium hydroxide, lithium carbonate, lithium acetate, lithium nitrate, and combinations thereof, and the M-containing compound is a compound comprising an element selected from the group consisting of Zr, Si, La, Ba, Sr, Nb, Al, Mg, Y, and combinations thereof.

13. The method according to claim 11, wherein the high-temperature sintering in step 1) is a two-stage calcination, a first stage calcination is conducted at a temperature in a range from 400 °C to 600 °C for 2 hours to 4 hours, and a second stage calcination is conducted at a temperature in a range from 600 °C to 1000 °C for 8 hours to 15 hours.

14. The method according to claim 13, wherein the sintering in step 2) is conducted at a temperature in a range from 600°C to 900 °C, preferably from 650 °C to 850 °C, for 5 hours to 12 hours, preferably from 6 hours to 9 hours.

15. The method according to any one of claims 11 to 14, wherein an addition amount of the cobalt source is in a range from 10,000 ppm to 30,000 ppm, and a median particle size D50 of the cobalt source is in a range from 0.8 µm to 4.0 µm, preferably from 1.0 µm to 2.0µm.
